# EUROPEAN PATENT APPLICATION

(11) **EP 4 765 258 A1**
(43) Date of publication of application: **24.06.2026**
(21) Application number: 24307131.3
(22) Date of filing: 17.12.2024
(51) Int. Cl.: H01M 8/04029, H01M 8/04044, H01M 8/0432, H01M 8/04746, B01J 47/024, C02F 103/02

(54) **COOLANT VESSEL FOR A COOLING CIRCUIT OF A FUEL CELL SYSTEM, COOLING CIRCUIT COMPRISING SUCH COOLANT VESSEL, AND VEHICLE COMPRISING SUCH COOLING CIRCUIT OR SUCH COOLANT VESSEL**

(71) Applicant: ALSTOM Transport SA, 93400 St-Ouen sur Seine (FR)
(72) Inventor: HAMMADI, Yacine, 13510 Eguilles (FR); COGOLUENHES, Anthony, 84120 Pertuis (FR); MARTINEZ, Gaël, 13760 Peyrolles (FR)
(74) Representative: Plasseraud IP

(57) **Abstract**

Coolant vessel (1) for a cooling circuit (100) of a fuel cell system, characterized in that it comprises at least:
- a tank (2) suitable to be connected to the cooling circuit;
- a coolant (3) which is contained in the tank and is suitable to be circulated along the cooling circuit, wherein the coolant (3) comprises at least one component to be deionized;
- a deionizing cartridge (4) which is removably connected to and is at least partially inserted inside the tank (2), wherein the deionizing cartridge (4) is configured to deionize said at least one component to thereby maintain conductivity of the coolant (3) below a predetermined threshold.

## Description

The present invention concerns a coolant vessel for a cooling circuit of a fuel cell system, a cooling circuit of a fuel cell system comprising such a coolant vessel, and a vehicle comprising such cooling system or such coolant vessel.

The coolant vessel according to the present invention is particularly suitable to be used in cooling circuits or loops of fuel cell systems installed onboard or trains, especially when such systems are roof-mounted; hence, it will be described hereinafter by making reference to such application without intending in any way to limits its possible applications to other type of vehicles, for example to waterborne transport vehicles.

Classically, in fuel cell systems used in railway vehicles, the cooling line contains a specific line to deionize the coolant while the system is running. The deionization of the coolant is permitted by separated deionization and particle filters or cartridges which are mounted in parallel with a pump suitable to pump a coolant in the cooling line.

This solution is not compact and requires an adequate and rather demanding maintenance schedule, especially when such systems are roof-mounted onboard a train.

Indeed, in such cases the space available is somehow constraint, and also accessibility to the system for performing maintenance is limited.

Unfortunately, at least some of the parts used in the cooling circuit, such as the deionization filter, need to be replaced rather frequently and nowadays it may be difficult to assure a good accessibility to the equipment that need maintenance.

Further, the coolant used requires a proper logistic to store it, to bring it to the train, and thereafter to eliminate the waste part. Therefore, train constructors require to minimize loss of coolant during train exploitation, even in the maintenance phases.

To this regard, for example when the deionization filter or cartridge has to be replaced, additional valves are mounted on both sides of the filter or cartridge and need to be manually actuated for performing the replacement.

This clearly increases the costs for realizing and maintain the system, and also negatively affects its overall compactness.

Hence, the present invention is aimed at providing a solution capable of at least mitigating one or more of the above mentioned issues.

Accordingly, the present invention provides a coolant vessel for a cooling circuit of a fuel cell system, characterized in that it comprises at least:
- a tank suitable to be connected to the cooling circuit;
- a coolant which is contained in the tank and is suitable to be circulated along the cooling circuit, wherein the coolant comprises at least one component to be deionized;
- a deionizing cartridge which is removably connected to and is at least partially inserted inside the tank, wherein the deionizing cartridge is configured to deionize said at least one component to thereby maintain conductivity of the coolant below a predetermined threshold.

Preferred embodiments of the coolant vessel according to the invention are specified in the dependent claims, the contents of which are to be understood as an integral part of this description.

The above-mentioned aim of the present invention is also achieved by a cooling circuit for a fuel cell system according to claim 14, and by a vehicle, notably a railway vehicle, according to claim 15.

Further characteristics and advantages will become apparent from the description of some preferred but not exclusive exemplary embodiments of a coolant vessel according to the present invention, illustrated only by way of non-limitative examples with the accompanying drawings, wherein:
Figure 1 is a perspective view showing an exemplary embodiment of a coolant vessel according to the invention;
Figure 2 shows the coolant vessel of figure 1 partially cut to illustrate the inner part thereof;
Figure 3 illustrates the coolant vessel according to the invention while a deionizing cartridge is under removal;
Figure 4 is a block diagram schematically showing a cooling circuit of a fuel cell system comprising a coolant vessel according to the invention.

It should be noted that in the detailed description that follows, identical or similar components, either from a structural and/or functional point of view, may have the same or different reference numerals, regardless of whether they are shown in the same or different embodiments of the present disclosure.

It should also be noted that in order to clearly and concisely describe the present disclosure, the drawings may not necessarily be to scale and certain features of the disclosure may be shown in somewhat schematic form.

Further, when the term "configured", or "adapted", or "shaped", or a similar term is used herein while referring to any component as a whole, or to any part of a component, or to a combination of components, it has to be understood that it means and encompasses correspondingly either the structure, and/or the configuration and/or the form and/or the positioning.

In addition, when the term "about" or "substantial" or "substantially" is used herein, it has to be understood as encompassing unavoidable mechanical tolerances, an actual variation of plus or minus 5% with respect to an indicated reference value, axis, time or position, and when the terms transversal or transversely are hereby used, they have to be understood as encompassing a direction non-parallel to the reference part(s) or direction(s)/axis they refer to, and perpendicularity has to be considered a specific case of transverse direction.

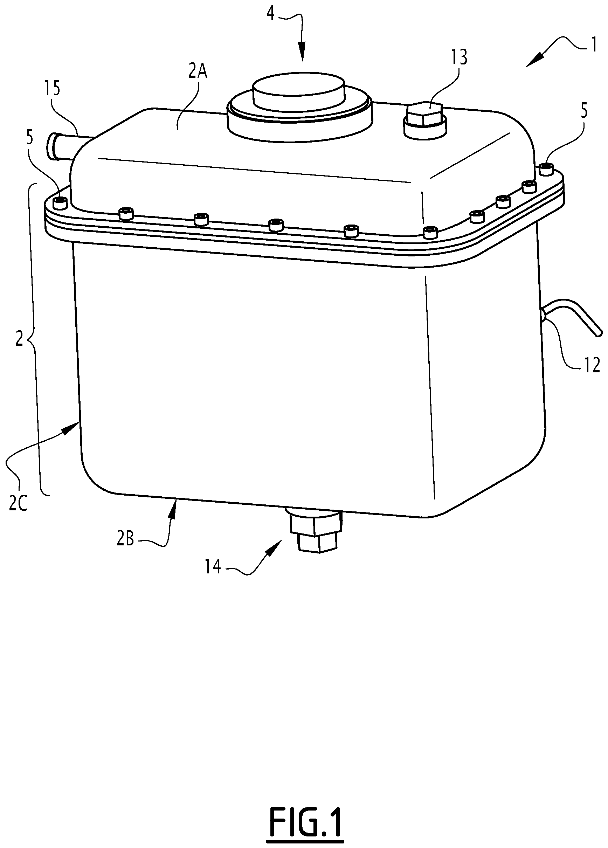

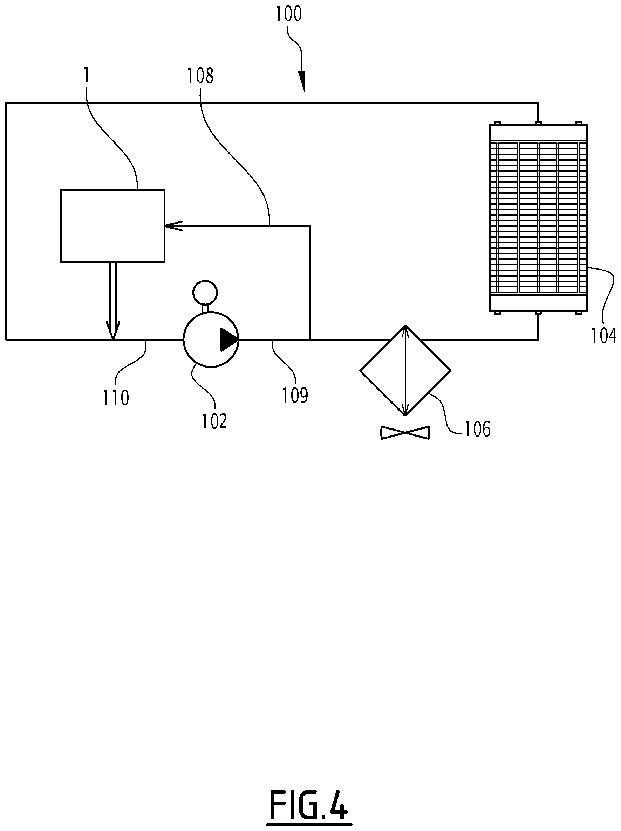

Figures 1 to 3 show a coolant vessel 1 for a cooling circuit of a fuel cell system, an example of such cooling circuit is schematically illustrated in figure 4 and therein indicated by the overall reference number 100.

As illustrated in figure 4, in addition to the coolant vessel 1, the cooling circuit 100, which can be also indicated as the coolant loop, comprises a pump 102 for circulating the coolant along the circuit, and in particular towards a stack of fuel cells 104, and a heat exchanger 106.

A degazing line 108 is for example interconnected between a point of a circuit line 109 downward the pump 102 and the cooling vessel 1.

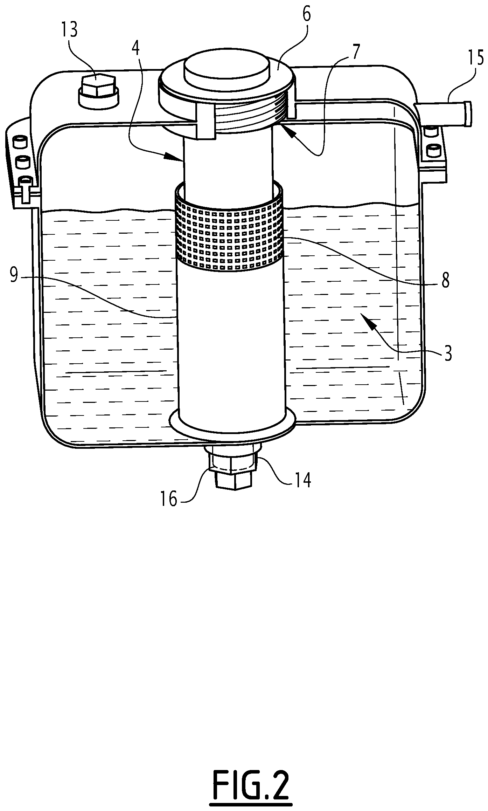

The coolant vessel 1 comprises at least:
- a tank 2 suitable to be connected to (or in any case to be part of) the cooling circuit 100;
- a coolant, schematically represented by the reference number 3 only in figure 2 for the sake of simplicity. As illustrated, the coolant 3 is contained in the tank 2 and is suitable to be circulated along the cooling circuit 100, and comprises at least one component to be deionized;
- a deionizing cartridge, indicated in the figures by the overall reference number 4, which is removably connected to and is at least partially inserted inside the tank 2.

In particular, the deionizing cartridge 4 is configured to deionize the at least one component of the coolant 3 to thereby maintain conductivity of the coolant 3 itself below a predetermined threshold.

For example, the coolant comprises or is constituted by a mixture of deionized water and glycol with a certain concentration selected to resist freezing.

Clearly, it is possible to use any suitable type of coolant.

For example, the deionizing cartridge 4 contains a mixed bed of anion and cation resin especially developed for fuel cell application.

Clearly, any type of cartridge suitable for deionizing the coolant can be likewise used.

Depending on the application, the tank 2 can be realized in any suitable material, such as metal or plastic, and can be pressurized or not, and comprises a plurality of walls, e.g. a top wall 2A, a bottom wall 2B, and one or more lateral walls 2C.

Clearly, the definition of top wall and bottom wall is referred to the view illustrated in figure 1 and should not be interpreted as limiting, since it is hereby given only for the sake of ease of illustration.

In the exemplary embodiment illustrated, the tank 2 has in particular a substantially parallelepiped shape and comprises two parts, namely a lower container part and an upper or lid part which is connected to the lower part, for example by means of screws 5.

Clearly, the tank 2 can have any suitable configuration other than that illustrated in the exemplary embodiment of figures 1 to 3.

In one possible embodiment, the deionizing cartridge 4 is partially inserted within the tank 2 and has at least an end portion 6 thereof (e.g. with reference to the figures 1-3, a top end portion) which extends outside the tank 2 and is releasably connected to a first wall (e.g. the top wall 2A) of the tank 2.

In particular, in the embodiment illustrated in figures 1 to 3, the deionizing cartridge 4 is inserted inside the tank 2 via an opening 7 provided at the first wall, e.g. the top wall 2A, and its end portion 6, which protrudes outwardly from the top wall 2A is screwed onto an associated threaded surface of such opening 7.

In this way, the deionizing cartridge 4 can be easily inserted inside the tank 2 and then releasably connected to the tank 2, thereby keeping it in the working position.

This is obtained even if the system is working and the cooling is circulating in the loop.

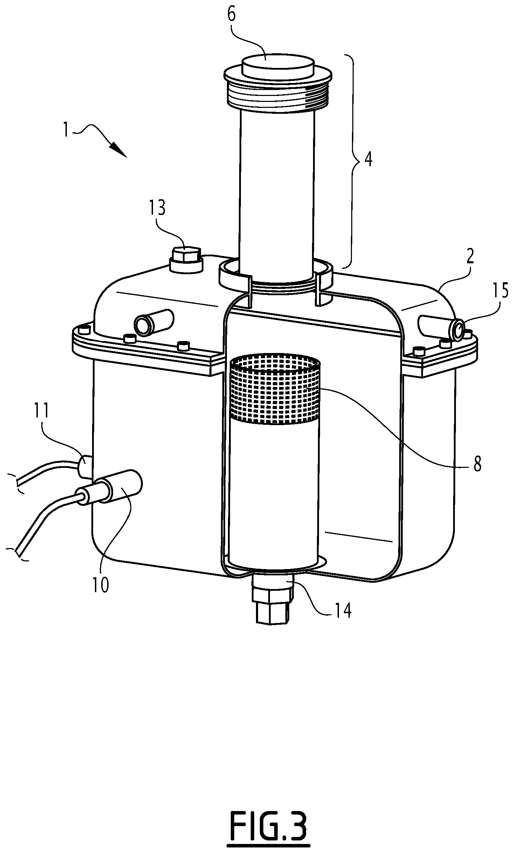

When the deionizing cartridge 4 has to be removed and replaced, it can be very easily unscrewed from the tank 2 and then extracted as shown in figure 3.

In this case, the tightness of the connection can be further ensured by a gasket mounted at the top of the deionizing cartridge 4.

In another possible embodiment, not illustrated by figures, the deionizing cartridge 4 is completely inserted within the tank 2.

According to this embodiment, the tank 2 comprises an access hatch, e.g. positioned where the opening 7 is placed; the access hatch can be closed once the deionizing cartridge 4 is fully inserted inside the tank 2 and opened to allow removing it when necessary.

According to this embodiment, the deionizing cartridge 4, once introduced inside the tank 2, can be screwed, for instance at a bottom part thereof, onto a wall of the tank 2, e.g. onto a threaded surface of the bottom wall 2B, in a manner similar to what described with respect to the top end portion 6.

In one possible embodiment, the coolant vessel 1 further comprises a perforated sheet 8 which is positioned inside the tank 2, and the deionizing cartridge 4 is at least partially inserted within the perforated sheet 8.

In the embodiment illustrated, the perforated sheet 8 is for instance cylindrically shaped.

In the exemplary embodiment illustrated in figures 2 and 3, the perforated sheet 8 is positioned inside an outer wall or container 9, which is also positioned inside the tank 2.

For example, the perforated cylinder 8 permits to guide the flow through the vessel, e.g. to make sure that the cooling leaving the vessel was passed through the cartridge.

In this case, the outer container or wall 9 can be connected for example to the bottom wall 2B of the tank 2, and the deionizing cartridge 4, once introduced inside the tank 2, and in particular inside the perforated sheet 8, can be screwed, for instance at a bottom part outer container 9, e.g. in a manner similar to what described above about screwing the top end 6 or the bottom part of the deionizing cartridge 4.

In one possible embodiment, the coolant vessel 1 comprises a conductivity sensor, schematically indicated in figure 3 by the reference number 10, which is configured to detect, e.g. substantially continuously the conductivity of the coolant 3.

In practice, the conductivity sensor 10 outputs signals that can be monitored by a controller (not shown in the figures) thereby allowing to measure the actual conductivity of the coolant 3.

When the measured conductivity reaches the predetermined threshold, this indicates that the deionizing cartridge 4 must be changed.

For example, in such circumstances the controller may issue any type of warning signals of alerts for operators.

In one possible embodiment, the coolant vessel 1 comprises a level sensor, schematically indicated in figure 3 by the reference number 11, which is configured to detect the level of coolant 3 inside the tank 2.

In practice, the level sensor 11 outputs signals that can be monitored by the controller thereby allowing to measure the actual quantity of coolant 3, and hence to identify if the tank 2 has to be refilled.

In one possible embodiment, the coolant vessel 1 comprises a temperature sensor 12 which is configured to detect the temperature of the coolant 3 inside the tank 2.

In one possible embodiment, the coolant vessel 1 comprises a breather plug indicated in figures 1-3 by the reference number 13.

As illustrated, the breather plug 13 is provided for example at the top wall 2A of the tank 2 and is configured to allow venting of gases accumulated inside the tank 2.

The breather plug 13 allows limiting the pressure in the cooling circuit 100 when the temperature is increasing and the under pressure when the temperature is decreasing.

In particular, the breather plug 13 is removably connected to the wall of the tank 2 or is configured to be opened to thereby allow also refilling of coolant 3 inside the tank 2.

According to some possible embodiments, the tank 2 is provided with one more inlets and outlets for connecting the tank with other parts of the cooling circuit 100.

In particular, according to the exemplary embodiment illustrated in figures 1-3, the tank 2 comprises at least one outlet 14 and one inlet 15.

The outlet 14 protrudes outwardly from a wall of the tank 2, e.g. from the bottom wall 2B, and is connected to a line 110 of the circuit upward from and leading to the pump 10.

In one possible embodiment, the vessel 1 further comprises a particle filter, schematically indicated in figure 2 by the dotted line 16 which is for example positioned at the mouth of and inside the at least one outlet 14.

The particle filter 16 is configured to trap particles, thereby preventing clogging of the fuel cells 104.

The at least one inlet 15 protrudes outwardly from a wall of the tank 2, e.g. from a side wall 2C and is suitable to be connected to at least a point of the cooling circuit 100 that needs to be vented or that has a pressure higher than that of the coolant 3 circulating in the remaining part of the cooling circuit 100, to thereby allow recirculation of the coolant 3 to thereby allow proper recirculation of the coolant 3 inside the tank 2.

In particular, the at least one inlet has a predetermined diameter sized to thereby limit the flowrate of fluid, e.g. liquid coolant or gas or mixture thereof, entering the tank 2.

In this way, inside the tank 2 there is established a recirculation and a decrease of the temperature of the coolant that permit to maximise the lifetime of the cartridge because the flow is distributed homogenously over the whole cartridge area.

Hence, it has been demonstrated how the coolant vessel 1 according to the invention allows achieving the intended aim since it provides a compact solution that integrates, among other components, the deionizing cartridge which can be easily installed and replaced, thus simplifying maintenance interventions.

The coolant vessel 1 thus conceived is susceptible of modifications and variations, all of which are within the scope of the inventive concept as defined in particular by the appended claims. For example, all sensors previously disclosed can be used or only some of them, the sensors can be positioned in different parts with respect to those depicted in the illustrated embodiments.

Depending on applications, the material of most if not all components can be suitably selected; for instance, for railways applications, apart from the cartridge, the various parts, and in particular the tank can be realized in metal to be compliant with fire and smoke standards.

All the details may furthermore be replaced with technically equivalent elements.

## Claims

1. Coolant vessel (1) for a cooling circuit (100) of a fuel cell system, **characterized in that** it comprises at least:
- a tank (2) suitable to be connected to the cooling circuit;
- a coolant (3) which is contained in the tank and is suitable to be circulated along the cooling circuit, wherein the coolant (3) comprises at least one component to be deionized;
- a deionizing cartridge (4) which is removably connected to and is at least partially inserted inside the tank (2), wherein the deionizing cartridge (4) is configured to deionize said at least one component to thereby maintain conductivity of the coolant (3) below a predetermined threshold.

2. Coolant vessel (1) according to claim 1, wherein the deionizing cartridge (4) is partially inserted within the tank (2) and has at least an end portion (6) which extends outside the tank (2) and is releasably connected to a first wall (2A) of the tank (2).

3. Coolant vessel (1) according to claim 1, wherein the deionizing cartridge (4) is screwed at its end portion (6) to said first wall of the tank (2).

4. Coolant vessel (1) according to claim 1, wherein the deionizing cartridge (4) is completely inserted within the tank (2), and wherein the tank (2) comprises an access hatch adapted to allow removing the deionizing cartridge (4).

5. Coolant vessel (1) according to any one of the previous claims, further comprising a perforated sheet (8) which is positioned inside the tank (2), and wherein the deionizing cartridge (4) is at least partially inserted within the perforated sheet (8).

6. Coolant vessel (1) according to one or more of the previous claims, further comprising a conductivity sensor (10) which is configured to detect the conductivity of the coolant (3).

7. Coolant vessel (1) according to one or more of the previous claims, further comprising a level sensor (11) which is configured to detect the level of coolant (3) inside the tank (2).

8. Coolant vessel (1) according to one or more of the previous claims, further comprising a temperature sensor (12) which is configured to detect the temperature of the coolant (3) inside the tank (2).

9. Coolant vessel (1) according to one or more of the previous claims, further comprising a breather plug (13) which is provided at the first wall (2A) of the tank (2) and is configured to allow venting of gases formed inside the tank (2).

10. Coolant vessel (1) according to claim 9, wherein the breather plug (13) is removably connected to said first wall (2A) of the tank (2) or is configured to be opened to thereby allow refilling of coolant (3) inside the tank (2).

11. Coolant vessel (1) according to one or more of the previous claims, wherein the tank (2) comprises at least one outlet (14) protruding outwardly from a wall (2B) of the tank (2), and wherein the vessel (1) further comprises a particle filter (16) which is positioned at the mouth of and inside the at least one outlet (14).

12. Coolant vessel (1) according to one or more of the previous claims, wherein the tank (2) comprises at least one inlet (15) protruding outwardly from a wall (2C) of the tank (2) and suitable to be connected to at least a point of the cooling circuit (100) that needs to be vented or that has a pressure higher than that of the coolant (3) circulating in the remaining part of the cooling circuit (100), to thereby allow recirculation of the coolant (3).

13. Coolant vessel (1) according to claim 12, wherein said at least one inlet (15) has a predetermined diameter sized to thereby limit the flowrate of fluid entering the tank (2).

14. A cooling circuit (100) for a fuel cell system, comprising a coolant vessel (1) according to one or more of the previous claims.

15. A vehicle, notably a railway vehicle, comprising a cooling circuit (100) according to claim 14 or a coolant vessel (1) according to one or more of claims 1 to 13.
